# EUROPÄISCHE PATENTSCHRIFT

(11) **EP 2 553 290 B1**
(45) Veröffentlichungstag und Bekanntmachung des Hinweises auf die Patenterteilung: **23.08.2017**
(21) Anmeldenummer: 11706213.3
(22) Anmeldetag: 24.02.2011
(51) Int. Cl.: F16D 65/12

(54) **BREMSSCHEIBE**
BRAKE DISC
DISQUE DE FREIN

(30) Priorität: 27.03.2010 DE 102010013160
(43) Veröffentlichungstag der Anmeldung: 06.02.2013
(73) Patentinhaber: Bayerische Motoren Werke Aktiengesellschaft, 80809 München (DE)
(72) Erfinder: KARL, Stefan, 80804 Muenchen (DE); KOKOTT, Kordian, 80992 Muenchen (DE)
(86) Internationale Anmeldenummer: PCT/EP2011/052757
(87) Internationale Veröffentlichungsnummer: WO 2011/120741

(56) Entgegenhaltungen:
- DE-A1- 3 400 701
- DE-B3- 10 234 104
- JP-A- 2006 336 852
- JP-U- H0 581 544

## Beschreibung

Die Erfindung betrifft eine Bremsscheibe für eine Fahrzeug-Scheibenbremse, insbesondere für Personenkraftwagen, nach dem Oberbegriff des Anspruchs 1. Zum Stand der Technik wird insbesondere auf die US 2005/0145452 A1 und die JP2006336852A verwiesen.

Sogenannte gebaute Kraftfahrzeug-Bremsscheiben mit einem im Betrieb mit Reibbelägen zusammenwirkenden Reibring aus einem ersten Material, beispielsweise Grauguss oder Edelstahl, und mit einem diesen Reibring tragenden sog. Bremsscheibentopf aus einem anderen Material, beispielsweise aus einer Leichtmetall-Legierung, sind in mannigfachen Ausgestaltungen bekannt. An Kraftfahrzeugen, insbesondere Personenkraftwagen, ist angestrebt, sämtliche Bauteile und insbesondere die ungefederten Massen, wozu die üblicherweise direkt an den bzw. innerhalb der Räder(n) angeordneten Bremsscheiben gehören, so leicht als möglich zu gestalten. Aus diesem Grunde ist der Bremsscheibentopf aus einem Material mit geringem spezifischem Gewicht, so insbesondere aus einer Aluminium-Legierung, gefertigt. In diesem Sinne kann auch der Reibring aus einem spezifisch äußerst leichten Material bestehen, jedoch kommt hierfür wegen des Zusammenwirkens mit den Reibbelägen keine übliche Aluminiumlegierung in Frage, so dass auch bei Verwendung geeigneter spezifisch leichter Reibring-Materialen eine Bremsscheibe aus einem Reibring, der aus einem ersten, spezifisch geeigneten Material gefertigt ist, und aus einem Bremsscheibentopf, der aus einem zweiten, anderen spezifisch geeigneten Material gefertigt ist, zusammengebaut werden muss. Bei einer solchen aus verschiedenen Materialien zusammengebauten Bremsscheibe, die bzw. insbesondere deren Reibring sich im Betrieb bekanntlich signifikant erwärmen kann, kann jedoch das unterschiedliche Wärmeausdehnungs-Verhalten der verschiedenen Werkstoffe zu Problemen beispielsweise in Form der dem Fachmann bekannten Schirmung, zumindest jedoch zu unerwünschten Spannungen in der Bremsscheibe führen. Ausdrücklich erwähnt sei an dieser Stelle, dass der Reibring alternativ auch aus einem verglichen mit dem Material des Bremsscheibentopfes spezifisch schweren oder schwereren Material geformt sein kann, wobei die gleiche Problematik vorliegt.

Aus der eingangs genannten US 2005/0145452 A1 ist eine grundsätzlich interessante Bremsscheibe bekannt, mit einem geometrischen Auslegungs-Vorschlag zur Gewichtsreduktion, dessen Umsetzung erst aufgrund einer weiteren Maßnahme, nämlich durch einen quasi vorgespannten Bremsscheibentopf möglich wird, da nur damit eine funktional zuverlässige Gestaltung der Bremsscheibe in ihrer Gesamtheit erzielbar ist. Konkret ist dabei der Reibring in Radialrichtung betrachtet schmaler als üblich zu gestaltet, das heißt es ist ein Reibring mit geringerer (in Radialrichtung gemessener) Höhe als bislang üblich vorgesehen. Jedenfalls dann, wenn das Material des Reibrings spezifisch schwerer ist als das Material des Bremsscheibentopfes, bewirkt eine Verringerung der (in Radialrichtung gemessenen) Reibring-Höhe eine besonders intensive Reduzierung des Gewichts der Bremsscheibe, insbesondere da sich der Reibring in Radialrichtung weiter außen als der Bremsscheibentopf befindet. Dabei kann die reduzierte Reibringhöhe durch das Verhältnis der Reibring-Höhe zum Gesamt-Durchmesser der Bremsscheibe definiert werden. Dieses besagte Verhältnis liegt bei den heute üblichen Bremsscheiben von Personenkraftwagen in der Größenordnung zwischen 0,14 und 0,17. In der genannten Schrift ist eine Bremsscheibe mit einem Reibring gezeigt, dessen Höhe betragsmäßig maximal das 0,12-fache des gesamten Bremsscheiben-Durchmessers ist.

Hiermit soll nun eine funktional zuverlässige Bremsscheibe nach dem Oberbegriff des Anspruchs 1 aufgezeigt werden, die sich durch eine weiter verbesserte Gestaltung dahingehend, wie der Randbereich des Bremsscheibentopfes (nach außen pressend auf den Reibring einwirken kann, auszeichnet (= Aufgabe der vorliegenden Erfindung). Dies ist beim genannten Stand der Technik nämlich relativ aufwändig dargestellt.

Die Lösung dieser Aufgabe ist dadurch gekennzeichnet, dass der Randbereich des Tragwandabschnitts oder des Bremsscheibentopfes in Radialrichtung betrachtet zumindest geringfügig elastisch ausgeführt ist, indem fingerartige Segmente des Randbereichs in Radialrichtung betrachtet einen S-Schlag bilden. Vorteilhafte Weiterbildungen sind Inhalt der Unteransprüche.

Zunächst sei erwähnt, dass mit einem wie vorgeschlagen dimensionierten Bremsscheiben-Reibring bei Verwendung heute üblicher mit dem Reibring zusammenwirkender Bremssättel in Verbindung mit geringfügig schmäleren Bremsbelägen die bei Personenkraftwagen üblichen Bremsmomente erreicht werden können, insbesondere wenn der Durchmesser der Bremsscheibe gegenüber der heute üblichen Auslegung geringfügig gesteigert wird, da dann bei gleicher Anpresskraft der Bremsbeläge an den Reibring ein größerer Hebelarm für das entstehende Bremsmoment zur Verfügung steht.

Ein gegenüber bisher üblichen Reibringen schmalerer, d.h. nicht so hoher Reibring kann sich jedoch im Betrieb, d.h. bei starken Bremsvorgängen stärker erwärmen als ein wie bislang üblich dimensionierter Reibring einer gebauten Bremsscheibe mit einem den Reibring tragenden Bremsscheibentopf. Wenngleich der Wärmeausdehnungskoeffizient eines spezifisch schweren Reibring-Materials, wie beispielsweise Grauguss oder Edelstahl, möglicherweise (wesentlich) geringer ist als der Wärmeausdehnungskoeffizient des Materials des Bremsscheibentopfes, bei dem es sich vorzugsweise um eine Aluminium-Legierung handeln kann, so ist doch aufgrund der Tatsache, dass die Temperatur des Reibrings beim Bremsen wesentlich höher wird als diejenige des Bremsscheibentopfes, eine unterschiedliche Wärmeausdehnung dieser beiden Bauelemente der Bremsscheibe feststellbar. Gleiches kann auch bei Verwendung gewisser spezifisch äußerst leichter Materialien für den Reibring gelten, d.h. auch bei Verwendung solcher (gegenüber Grauguss oder Edelstahl erheblich teuerer und folglich nur für wenige Anwendungsfälle wirtschaftlich einsetzbarer) Materialen kann sich das Problem stellen, dass die dem Fachmann bekannte Schirmung verhindert werden muss. Im übrigen kann es sich bei dem genannten spezifisch äußerst leichten Reibring-Material um eine mit Aluminium getränkte Silicium-Carbid-Matrix oder um Kohlefaser-Siliziumkarbid handeln, die beide als Reibpartner für Reibbeläge von Scheibenbremsen gut geeignet sind.

Damit die im vorhergehenden Absatz genannte unterschiedliche Wärmeausdehnung, d.h. die gegenüber der Wärmeausdehnung des Bremsscheibentopfes stärkere Wärmeausdehnung des Reibrings nicht zu Problemen insbesondere im Verbindungsbereich zwischen Reibring und Bremsscheibentopf oder zur genannten Schirmung führt, ist der Bremsscheibentopf, wie weiterhin im unabhängigen Anspruch angegeben ist, unter Vorspannung mit dem Reibring verbaut bzw. verbunden. Diese Vorspannung wirkt derart, dass bei nicht durch einen Bremsvorgang erwärmtem Reibring der Randbereich des Bremsscheibentopfes direkt oder über die Verbindungselemente indirekt in Radialrichtung nach außen pressend auf den Reibring einwirkt, und es ist diese Vorspannung durch die Formgebung des Bremsscheibentopfes, nämlich zum einen durch den kegelstumpfförmigen Tragwandabschnitt und/oder dessen Randbereich einfach darstellbar bzw. dargestellt.

Insbesondere jedoch kann eine gewünschten Vorspannung mit Hilfe derer der Randbereich des Bremsscheibentopfes wie im unabhängigen Anspruch angegeben in Radialrichtung nach außen pressend auf den Reibring einwirken kann, dadurch erreicht werden, dass eine in Radialrichtung betrachtet zumindest geringfügige elastische Ausbildung des Randbereiches des Bremsscheibentopfes, die beispielsweise nach Art eines "Schwanenhalses" ausgeführt ist. Dies lässt sich als S-Schlag von fingerartigen Segmenten des besagten Randbereichs - in Radialrichtung betrachtet - darstellen.

Mit den soweit erläuterten Merkmalen ist es vorteilhafterweise möglich, Verbindungselemente in Form von Nieten oder Schrauben zwischen dem Bremsscheibentopf und dem Reibring vorzusehen, deren Längsachse parallel zur Drehachse der Bremsscheibe verläuft. Solche Verbindungselemente können einfacher eingebracht werden als die im genannten Stand der Technik vorgesehenen Verbindungselemente.

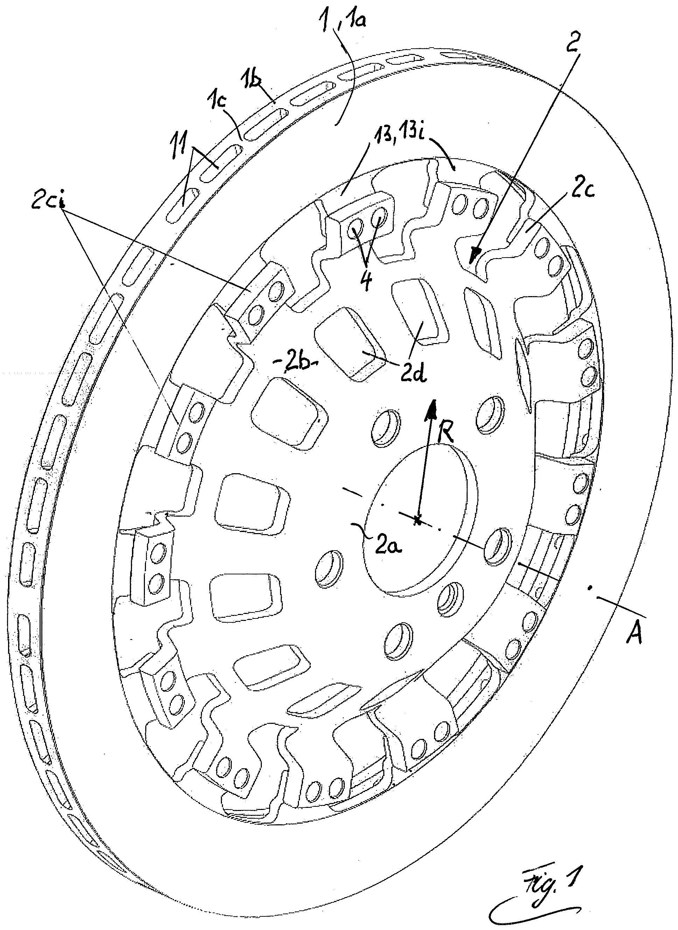

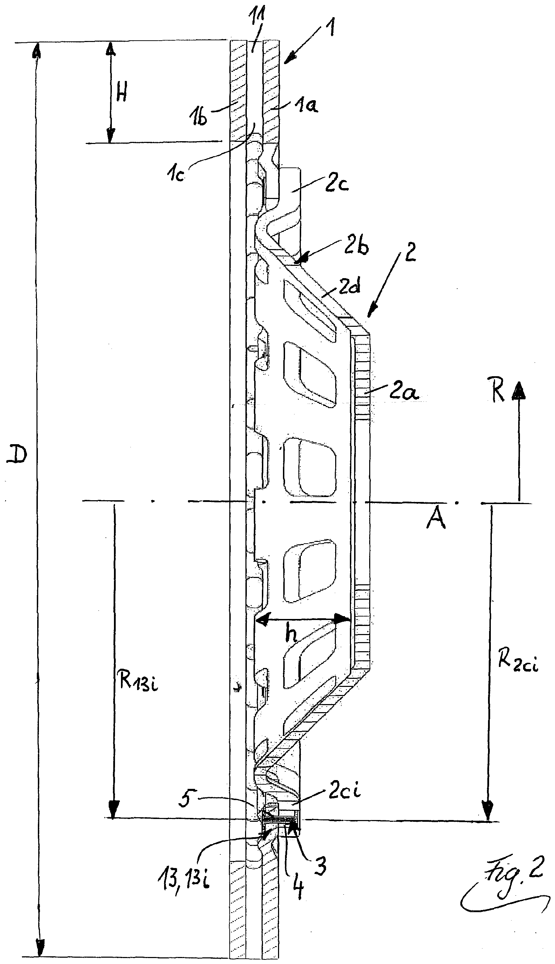

Wenn der Tragwandabschnitt eine Vielzahl von Durchbrüchen aufweist, so kann das Gewicht des Bremsscheibentopfes vorteilhafterweise ebenfalls gering gehalten werden. Die nötige Festigkeit ist hierbei beispielsweise dadurch erzielbar, dass der Tragwandabschnitt zumindest bereichsweise nach Art eines Fachwerks gestaltet ist. Weiterhin kann abermals im Hinblick auf die unterschiedlichen Wärmeausdehnungen von Reibring und Bremsscheibentopf der Randbereich des Tragwandabschnitts jeweils zwischen einander in Umfangsrichtung benachbarten Verbindungselementen zumindest geringfügig elastisch ausgeführt sein, was besonders intensiv umgesetzt ist, wenn der Randbereich in Form einzelner voneinander getrennter Segmente gebildet ist. Im Folgenden wird die Erfindung anhand eines in den beigefügten Figuren 1, 2 perspektivisch bzw. in einem Schnitt dargestellten Ausführungsbeispiels weiter erläutert.

Mit der Bezugsziffer 1 ist ein innenbelüfteter und somit über dem Umfang mehrere sich in Radialrichtung R erstreckende Lüftungsschlitze 11 aufweisender Reibring 1 einer Bremsscheibe einer Fahrzeug-Scheibenbremse gekennzeichnet. Auf die Vorderseite und die Rückseite dieses doppelwandigen Reibrings 1 können in dem Fachmann bekannter Weise sich nur über einen geringen Teil des Reibring-Umfangs erstreckende und von einem Bremssattel gehaltene (figürlich nicht dargestellte) Bremsbeläge pressend einwirken.

Diese Bremsscheibe ist vorzugsweise wie üblich an einer nicht dargestellten Nabe eines Rads des Fahrzeugs befestigt, und zwar über den sog. Bremsscheibentopf 2, welcher den Reibring 1 trägt. Dieser Bremsscheibentopf 2 besteht aus einem zentralen planen zur Drehachse des genannten Rades bzw. zur Drehachse A der Bremsscheibe senkrechten sog. Nabenabschnitt 2a, an den sich in Radialrichtung R nach außen erstreckend ein sog. Tragwandabschnitt 2b des Bremsscheibentopfes 2 anschließt, der einen Randbereich 2c aufweist, welcher vorliegend durch dreizehn quasi fingerförmige Segmente 2ci eines Rings mit jedenfalls im Bereich der freien Enden dieser fingerartigen Segmente 2ci zur Drehachse A senkrechten Stirnseiten gebildet ist. Diese fingerartigen Segmente 2ci ragen von einem Bereich des Tragwendabschnitts 2b, der zwischen dessen genannten Randbereich 2c und dem Nabenabschnitt 2a des Bremsscheibentopfes 2 liegt und der die Gestalt eines Kreiskegelstumpfes mit einer mit der Drehachse A zusammenfallenden Kegelachse besitzt, in Radialrichtung R nach außen ab.

Über den genannten Randbereich 2c trägt der Bremsscheibentopf 2 den Reibring 1, und zwar über mehrere über dem Umfang des Reibrings 1 bzw. des Randbereichs 2c verteilt angeordnete Verbindungselemente 3, von denen lediglich eines in Fig.2 unten dargestellt ist. Konkret ist zur Darstellung dieser Verbindung zwischen Bremsscheibentopf 2 und Reibring 1 vorliegend an eine der beiden Wände des Reibrings 1 und hier an die äußere Wand 1a, die in üblicher Weise mit der inneren Wand 1 b über Stege 1 c, zwischen denen die Lüftungsschlitze 11 verlaufen, verbunden ist, ein sog. Tragringabschnitt 13 angeformt. Vorliegend ist dieser mit dem Randbereich 2c des Bremsscheibentopfes 2 zusammenwirkende Tragringabschnitt 13 analog diesem Randbereich 2c gestaltet und folglich ebenfalls durch Tragringsegmente 13i gebildet, die an den Innenumfang der äußeren Wand 1a des Reibrings 1 angeformt sind und (ebenfalls - wie die Segmente 2ci des Randbereichs 2c) quasi in Radialrichtung abstehende Finger bilden. Jedes Tragringsegment 13i des Tragringabschnitts 13 des Reibrings 1 kommt mit einem Segment 2ci des Bremsscheibentopfes 2 in Axialrichtung A betrachtet zur Überdeckung, wobei diese genannten Elemente bereichsweise aufeinander aufliegen. Sowohl in den Segmenten 2ci des Randbereichs 2c als auch in den Tragringsegmenten 13i sind ebenfalls miteinander zur Überdeckung kommende in Axialrichtung A verlaufende Durchtrittsbohrungen 4 bzw. 5 vorgesehen, in welche Verbindungselemente 3, vorliegend in Form von Nieten, eingebracht sind, über welche somit der Reibring 1 und der Bremsscheibentopf 2 kraftschlüssig und/oder formschlüssig miteinander verbunden sind. Vorliegend besitzen die Durchtrittsbohrungen 4 in den Segmenten 2ci einen größeren Durchmesser als die Durchtrittsbohrungen 5 in den Tragringsegmenten 13i, jedoch ist dies nicht wesentlich.

An dieser Stelle sei ausdrücklich darauf hingewiesen, dass die Gestaltung des Randbereichs 2c und/oder des Tragringabschnitts 13 durchaus auch anderweitig als vorliegend beschrieben sein kann; wesentlich ist nur, dass über geeignet gestaltete Verbindungselemente 3 der Randbereich 2c des Tragwandabschnitts 2b mit dem Reibring 1 verbunden ist, wobei die Verbindung zwischen dem Bremsscheibentopf 2 und dem Reibring 1 mit vorgespanntem Tragwandabschnitt 2b hergestellt ist, derart, dass bei nicht durch einen Bremsvorgang erwärmtem Reibring 1 der Randbereich 2c des Bremsscheibentopfes 2 (bzw. von dessen Tragwandabschnitt 2b) direkt oder über die Verbindungselemente 3 indirekt in Radialrichtung R nach außen pressend auf den Reibring 1 einwirkt.

Diese "pressende Einwirkung" sowie das weitere wesentliche und vor der Figurenbeschreibung erläuterte Merkmal des unabhängigen Patentanspruchs, nämlich dass das Verhältnis der in Radialrichtung R gemessenen Höhe H des Reibrings 1 zum Durchmesser D der Bremsscheibe (vgl. hierzu insbesondere Fig.2) betragsmäßig kleiner als 0,12 (vorliegend = 0,11) ist, ist am vorliegend erläuterten Ausführungsbeispiel realisiert. Dabei erfolgt die genannte radial nach außen pressende Einwirkung über den Tragringabschnitt 13 des Reibrings 1 zunächst auf dessen äußere Wand 1a und über die Stege 1c schließlich auch auf die innere Wand 1 b des doppelwandigen Reibrings 1. Hervorgerufen werden kann die entsprechende radial nach außen pressende Kraft des Bremsscheibentopfes 2 einfach durch dessen Formgebung, und zwar durch die Kreiskegelstumpf-Form des Tragwandabschnittes 2b bzw. des entsprechend kegelstumpfförmig gestalteten Bereichs desselben, in Verbindung mit den konkreten geometrischen Abmessungen. Im vorliegenden Ausführungsbeispiel befinden sich dementsprechend die Mittelpunkte der Durchtrittsbohrungen 4 im Randbereich 2c des Bremsscheibentopfes 2 auf einem etwas größeren Radius (vgl. Fig.2 : R_{2ci}) bezüglich der Drehachse A als die Mittelpunkte der entsprechenden Durchtrittsbohrungen 5 in den Tragringsegmenten 13i des Reibrings 1, die auf dem geringfügig kleineren Radius R₁₃ᵢ liegen. Mit Einsetzen der Verbindungselemente 3 in die sich teilweise überdeckenden Durchtrittsbohrungen 4, 5 kann die benötigte Vorspannung im Tragwandabschnitt 2b, welche im zusammengefügten Zustand die genannte "pressende Einwirkung" erzeugt, hergestellt werden.

Vorliegend ist zur Verstärkung dieses Effekts, mit Hilfe dessen der Bremsscheibentopf 2 bei nicht erwärmtem Reibring 1 direkt oder über die Verbindungselemente 3 indirekt in Radialrichtung R nach außen pressend auf den Reibring 1 einwirkt, der Randbereich 2c des Tragwandabschnitts 2b bzw. des Bremsscheibentopfes 2 in Radialrichtung R betrachtet zumindest geringfügig elastisch ausgeführt. Diese elastische Ausbildung ist - wie Fig.2 zeigt - durch eine sog. Schwanenhals-Form der fingerartigen Segmente 2ci gebildet, indem diese in Radialrichtung R betrachtet einen S-Schlag bilden.

Nochmals auf das wesentliche Höhenverhältnis zurückkommend, nämlich dass das Verhältnis der in Radialrichtung R gemessenen Höhe H des Reibrings 1 zum Durchmesser D der Bremsscheibe kleiner als 0,12 ist, so sei darauf hingewiesen, dass sich die Höhe H auf den doppelwandigen Bereich des Reibrings 1 bezieht, d.h. diese Höhe H ist über den beiden mit den Bremsbelägen zusammenwirkenden Wänden 1 a, 1 b des Reibrings 1 zu messen und ist im wesentlichen für beide Wände 1 a, 1 b gleich. Nicht zu berücksichtigen ist bei der Ermittlung der Höhe H des Reibrings 1 hingegen dessen Tragringabschnitt 13; dieser Tragringabschnitt 13 bleibt - wie Fig.2 zeigt - bei der Ermittlung der Höhe H des Reibrings 1 außer Betracht.

Beim vorliegenden Ausführungsbeispiel beträgt das Verhältnis zwischen der in Richtung der Kegelachse (= Drehachse A) gemessenen Höhe h des einen Teilbereich des Tragwandabschnitts 2b beschreibenden Kreiskegelstumpfes und dem Durchmesser D der Bremsscheibe zahlenmäßig 0,076. Für erfindungsgemäße Bremsscheiben liegt dieses soeben genannte Zahlenverhältnis bevorzugt in der Größenordnung zwischen 0,07 und 0, 08, da hiermit beste Resultate erzielt wurden. Wie ersichtlich weist der Tragwandabschnitt 2b des Bremsscheibentopfes 2 eine Vielzahl von das Gewicht des Bremsscheibentopfes 2 reduzierenden Durchbrüchen 2d auf. Eine weitere Gewichtsreduktion bei gleichzeitig hoher Festigkeit wird erzielt, wenn der Reibring 1 zumindest teilweise aus dem Werkstoff DISPAL-Aluminium besteht, einem Material, das durch eine mit Aluminium getränkte Silicium-Carbid-Matrix gebildet ist.

## Patentansprüche

1. Bremsscheibe für eine Fahrzeug-Scheibenbremse, insbesondere für Personenkraftwagen, mit einem Reibring (1), der von einem Bremsscheibentopf (2) aus einem vorzugsweise spezifisch leichten Material getragen wird, welcher einen zentralen planen, zur Drehachse (A) der Bremsscheibe senkrechten Nabenabschnitt (2a) sowie einen sich hieran anschließenden radial nach außen erstreckenden und bereichsweise kreiskegelstumpfförmigen sog. Tragwandabschnitt (2b) aufweist, mit dessen freiem Randbereich (2c) der aus einem anderen Mateial bestehende Reibring (1) über Verbindungselemente (3) verbunden ist,
wobei das Verhältnis der in Radialrichtung (R) gemessenen Höhe (H) des Reibrings (1) zum Durchmesser (D) der Bremsscheibe betragsmäßig kleiner als 0,12 ist und dass die Verbindung zwischen dem Bremsscheibentopf (2) und dem Reibring (1) mit vorgespanntem Tragwandabschnitt (2b) hergestellt ist, derart, dass bei nicht durch einen Bremsvorgang erwärmtem Reibring (1) der Randbereich (2c) des Bremsscheibentopfes (2) direkt oder über die Verbindungselemente (3) indirekt in Radialrichtung (R) nach außen pressend auf den Reibring (1) einwirkt,
**dadurch gekennzeichnet, dass** der Randbereich (2c) des Tragwandabschnitts (2b) oder des Bremsscheibentopfes (2) in Radialrichtung (R) betrachtet zumindest geringfügig elastisch ausgeführt ist, indem fingerartige Segmente (2ci) des Randbereichs (2c) in Radialrichtung (R) betrachtet einen S-Schlag bilden.

2. Belüftete Bremsscheibe nach Anspruch 1 mit einem doppelwandigen Reibring (1) aus Grauguss oder Edelstahl oder aus einem spezifisch extrem leichten Material, wie einer mit Aluminium getränkten Silicium-Carbid-Matrix oder Kohlefaser-Siliziumkarbid.

3. Bremsscheibe nach Anspruch 1 oder 2, **dadurch gekennzeichnet, dass** die Verbindungselemente (3) Nieten oder Schrauben sind, deren Längsachse parallel zur Drehachse (A) der Bremsscheibe ist.

4. Bremsscheibe nach einem der vorangegangenen Ansprüche, **dadurch gekennzeichnet, dass** der Tragwandabschnitt (2b) des Bremsscheibentopfes (2) eine Vielzahl von Durchbrüchen (2d) aufweist.

5. Bremsscheibe nach Anspruch 4, **dadurch gekennzeichnet, dass** der Tragwandabschnitt (2b) nach Art eines Fachwerks gestaltet ist.

6. Bremsscheibe nach einem der vorangegangenen Ansprüche, **dadurch gekennzeichnet, dass** der Randbereich (2c) des Tragwandabschnitts (2b) bzw. des Bremsscheibentopfes (2) zwischen einander in Umfangsrichtung benachbarten Verbindungselementen (3) zumindest geringfügig elastisch ausgeführt ist.

7. Bremsscheibe nach einem der vorangegangenen Ansprüche, **dadurch gekennzeichnet, dass** das Verhältnis zwischen der in Richtung der Drehachse (A) der Bremsscheibe gemessenen Höhe (h) des Kreiskegelstumpfes des Tragwandabschnitts (2b) und dem Durchmesser (D) der Bremsscheibe in der Größenordnung von 0,07 bis 0,08 liegt.

## Claims

1. A brake disc for a vehicle disc brake, more especially for passenger cars, having a friction ring (1), which is supported by a brake disc chamber (2) made of a preferably specifically light material, which has a central flat hub portion (2a) perpendicular to the axis of rotation (A) of the brake disc and also what is known as a support wall portion (2b), which adjoins the hub portion in a manner extending radially outwardly and which has the shape of a truncated circular cone in some regions, the free edge region (2c) of said support wall portion being connected to the friction ring (1), which is made of a different material, by means of connection elements (3),
wherein the ratio of the height (H) of the friction ring (1), as measured in the radial direction (R), to the diameter (D) of the brake disc is less than 0.12 and the connection between the brake disc chamber (2) and the friction ring (1) is produced with a prestressing of the support wall portion (2b), in such a way that, when the friction ring (1) is not heated by a braking process, the edge region (2c) of the brake disc chamber (2) acts on the friction ring (1) in a manner pressing thereon outwardly in the radial direction (R) directly or indirectly by means of the connection elements (3),
**characterised in that** the edge region (2c) of the support wall portion (2b) or the brake disc chamber (2) as considered in the radial direction (R) has an least slightly resilient construction, which is provided by finger-like segments (2ci) of the edge region (2c) forming an S-type shape as considered in the radial direction (R).

2. A ventilated brake disc according to claim 1 having a double-walled friction ring (1) made of grey cast iron or stainless steel or made of a specifically extremely light material, such as an aluminium-saturated silicon-carbide matrix or carbon fibre-silicon carbide.

3. A brake disc according to claim 1 or 2, **characterised in that** the connection elements (3) are rivets or screws, the longitudinal axis of which is parallel to the axis of rotation (A) of the brake disc.

4. A brake disc according to any one of the preceding claims, **characterised in that** the support wall portion (2b) of the brake disc chamber (2) comprises a multiplicity of apertures (2d).

5. A brake disc according to claim 4, **characterised in that** the support wall portion (2b) is configured in the form of a framework.

6. A brake disc according to any one of the preceding claims, **characterised in that** the edge region (2c) of the support wall portion (2b) or of the brake disc chamber (2) is constructed in an at least slightly resilient manner between connection elements (3) that are adjacent to one another in the peripheral direction.

7. A brake disc according to any one of the preceding claims, **characterised in that** the ratio between the height (h) of the truncated circular cone of the support wall portion (2b) as measured in the direction of the axis of rotation (A) of the brake disc and the diameter (D) of the brake disc is in the order of magnitude of from 0.07 to 0.08.

## Revendications

1. Disque de frein destiné à un frein à disque d'un véhicule en particulier d'un véhicule de tourisme comprenant un anneau de friction (1) qui est supporté par un pot de disque de frein (2) en un matériau léger de préférence spécifique qui comporte un segment de moyeu central plan (2a) perpendiculaire à l'axe de rotation (A) du disque de frein, ainsi qu'un segment de paroi support (2b) s'y connectant, s'étendant radialement vers l'extérieur et par zones en forme de tronc de cône circulaire, qui est relié par sa zone de bord libre (2c) à l'anneau de friction (1) qui est constitué d'un autre matériau par l'intermédiaire d'éléments de liaison (3),
le rapport de la hauteur (H) de l'anneau de friction (1) mesurée en direction radiale (R) au diamètre (D) du disque de frein étant inférieur à 0,12, et, la liaison entre le pot du disque de frein (2) et l'anneau de friction (1) étant réalisée avec le segment de paroi support (2b) précontraint, de sorte que lorsque l'anneau de friction (1) n'est pas chauffé par un processus de freinage, la zone de bord (2c) du pot du disque de frein (2) agisse sur l'anneau de friction (1) en le comprimant vers l'extérieur dans la direction radiale (R) directement ou indirectement par l'intermédiaire des éléments de liaison (3),
**caractérisé en ce que**
la zone de bord (2c) du segment de paroi support (2b) ou du pot du disque de frein (2) est au moins un peu élastique dans la direction radiale (R), du fait que des segments en forme de doigts (2ci) de la zone de bord (2c) forment, une butée de choc en forme de S en direction axiale (R).

2. Disque de frein ventilé conforme à la revendication 1,
comprenant un anneau de friction (1) à double paroi en fonte grise, en acier spécial ou en un matériau extrêmement léger spécifique tel qu'une matrice en carbure de silicium imprégnée d'aluminium ou du carbure de silicium renforcé par des fibres de carbone.

3. Disque de frein ventilé conforme à la revendication 1 ou 2, **caractérisé en ce que**
les éléments de liaison (3) sont des rivets ou des vis dont l'axe longitudinal est parallèle à l'axe de rotation (A) du disque de frein.

4. Disque de frein conforme à l'une des revendications précédentes, **caractérisé en ce que**
le segment de paroi support (2b) du pot du disque de frein (2) comporte une série d'évidements (2d).

5. Disque de frein conforme à la revendication 4,
**caractérisé en ce que**
le segment de paroi support (2b) est du type treillis.

6. Disque de frein conforme à l'une des revendications précédentes, **caractérisé en ce que**
la zone de bord (2c) du segment de paroi support (2b) ou du pot du disque de frein (2) est au moins un peu élastique entre des éléments de liaison (3) voisins dans la direction périphérique.

7. Disque de frein conforme à l'une des revendications précédentes, **caractérisé en ce que**,
le rapport entre la hauteur (h) du tronc de cône circulaire du segment de paroi support (2b) mesurée dans la direction de l'axe de rotation (A) du disque de frein et le diamètre (D) du disque de frein est de l'ordre de 0,07 à 0,08.
